# NEUE EUROPÄISCHE PATENTSCHRIFT

(11) **EP 1 384 616 B2**
(45) Veröffentlichungstag und Bekanntmachung des Hinweises auf die Entscheidung über den Einspruch: **26.10.2011**
(45) Hinweis auf die Patenterteilung: 06.09.2006
(21) Anmeldenummer: 03102244.5
(22) Anmeldetag: 21.07.2003
(51) Int. Cl.: B60J 10/04, B60J 10/00

(54) **Dichtungsanordnung, insbesondere zum Abdichten einer verfahrbaren Fensterscheibe eines Kraftfahrzeugs**
Seal configuration, in particular for the sealing of a movable window pane for a vehicle
Garniture d'étanchéité, en particulier pour étanchéifier une vitre mobile de véhicule

(30) Priorität: 23.07.2002 DE 10233422
(43) Veröffentlichungstag der Anmeldung: 28.01.2004
(73) Patentinhaber: Metzeler Automotive Profile Systems GmbH, 88131 Lindau/Bodensee (DE)
(72) Erfinder: Hemauer, Stephan, 88147 Achberg (DE)
(74) Vertreter: Schober, Christoph D.

(56) Entgegenhaltungen:
- EP-A- 0 113 095
- EP-A- 1 302 346
- DE-A- 10 039 655
- FR-A- 1 299 379
- FR-A- 1 408 521
- JP-A- 11 101 075
- JP-A- 63 134 813
- JP-U- 59 172 021
- JP-U- 62 002 413
- US-A- 5 519 968
- US-A- 5 561 003
- US-A- 5 799 442

## Beschreibung

Die Erfindung betrifft eine Dichtungsanordnung, die insbesondere zum Abdichten einer verfahrbaren Fensterscheibe eines Kraftfahrzeugs dient. Die Dichtungsanordnung ist mit einem Karosserieteil und einer Dichtung, die einen Dichtungsabschnitt und einen Befestigungsabschnitt aufweist, versehen. An dem Befestigungsabschnitt ist eine Lasche angeordnet, die formschlüssig mit dem Karosserieteil verbunden ist.

Eine Dichtungsanordnung zum Abdichten einer verfahrbaren Fensterscheibe eines Kraftfahrzeugs wird in der EP 0 482 999 B1 beschrieben. Die bekannte Dichtungsanordnung umfaßt eine Dichtung, die einen im Querschnitt annähernd U-förmig ausgestalteten Befestigungsabschnitt aufweist. Der Befestigungsabschnitt ist auf einen Flansch der Karosserie des Kraftfahrzeugs aufgesteckt. Ein mit dem Befestigungsabschnitt verbundener hakenförmiger Vorsprung greift in eine Öffnung des Flansches ein, um die Dichtung zusätzlich zu verrasten.

Weiterhin wird in der EP 0 715 981 A1 eine Dichtungsanordnung offenbart, die eine Dichtung aufweist, die sich aus einem eine Fensterscheibe eines Kraftfahrzeugs abdichtenden Dichtungsabschnitt und einem im Querschnitt annähernd U-förmig ausgestalteten Befestigungsabschnitt zusammensetzt. Der Befestigungsabschnitt ist auf einen Flansch einer Tür des Kraftfahrzeugs aufgesteckt. Zusätzlich sind eine Vielzahl von Befestigungsmitteln vorgesehen, die den Dichtungsabschnitt formschlüssig an der Tür des Kraftfahrzeugs festlegen.

Die bekannten Dichtungsanordnungen ermöglichen zwar aufgrund des hakenförmigen Vorsprungs beziehungsweise der zusätzlichen Befestigungsmittel eine zuverlässige Befestigung der Dichtung an einem Karosserieteil. Als nachteilig hat sich aber die vergleichsweise aufwendige Montage und kostenintensive Herstellung erwiesen. Dies ist vor allem darauf zurückzuführen, daß sowohl der hakenförmige Vorsprung als auch die zusätzlichen Befestigungsmittel als separate Bauteile gefertigt werden, die mit dem Befestigungsabschnitt der Dichtung auf verhältnismäßig aufwendige Weise zu verbinden sind.

Außerdem offenbart die DE 196 27 652 A1 einen Dichtungsstreifen, der insbesondere als Fensterschachtdichtung dient. Der bekannte Dichtungsstreifen weist einen aus einem elastomeren Werkstoff gefertigten Dichtungsabschnitt auf, der mit einer an einer Fensterscheibe anliegenden Dichtlippe versehen ist. Darüber hinaus weist der Dichtungsstreifen einen aus einem vergleichsweise starren Thermoplast, beispielsweise Polyethylen, gefertigten Basisabschnitt auf, der stoffschlüssig, beispielsweise mittels Kleben, mit dem Dichtungsabschnitt verbunden ist. Von dem Basisabschnitt ragen aus einem thermoplastischen Werkstoff bestehende Halteflansche oder Laschen ab, die formschlüssig in Aussparungen eines Karosserieteils eingreifen. Die Laschen sind mit einem Schlitz versehen, der an einem Randabschnitt der Aussparung einrastet. Zu diesem Zweck sind die Laschen in Richtung des Schlitzes schwenkbar ausgebildet. Der Basisabschnitt und die Laschen werden einstückig durch Spritzgießen gefertigt und mit dem durch Extrusion gefertigten Dichtungsabschnitt verbunden, so daß der Basisabschnitt und die Laschen aus ein und demselben starren Werkstoff bestehen. Die Verformungsfähigkeit des Laschen wird durch die Ausgestaltung im Bereich des Schlitzes erreicht.

Eine weitere, gattungsgemäße Dichtungsanordnung ist aus der EP 0 113 095 A bekannt.

Das Vorsehen von Laschen bei den bekannten Dichtungsstreifen dient dazu, die Abzugskraft, die erforderlich ist, un den Dichtungsstreifen von dem Karosserieteil zu entfernen, zu erhöhen. Durch die schwenkbare Ausgestaltung der Laschen wird zudem eine einfache Demontage des Dichtungsstreifens sichergestellt. Nachteilig bei dem bekannten Dichtungsstreifen ist allerdings eine vergleichsweise aufwendige und damit kostenintensive Fertigung.

Der Erfindung liegt die **Aufgabe** zugrunde, eine Dichtungsanordnung der eingangs genannten Art dahingehend weiterzubilden, daß sich bei zuverlässiger Befestigung der Dichtung an dem Karosserieteil eine vergleichsweise einfache Montage und kostengünstige Fertigung erzielen lassen.

Zur **Lösung** dieser Aufgabe wird eine Dichtungsanordnung gemäß Anspruch 1 vorgeschlagen.

Die erfindungsgemäße Dichtungsanordnung beruht auf der Erkenntnis, den Befestigungsabschnitt formschlüssig mit dem Karosserieteil zu verbinden, um eine zuverlässige Befestigung der Dichtung an dem Karosserieteil zu erreichen. Der Formschluß erhöht die Abzugskraft, die erforderlich ist, um die Dichtung von dem Karosserieteil zu entfemen. Auf diese Weise trägt die Lasche zu einem wirksamen Schutz beispielsweise gegen Einbruch bei. Darüber hinaus handelt es sich bei einer Lasche um ein in konstruktiver Hinsicht einfaches Bauteil, das sich kostengünstig fertigen läßt. Die an dem Befestigungsabschnitt angeordnete Lasche ermöglicht zudem eine einfache Montage, indem sie beispielsweise mit dem Karosserieteil verrastet wird.

Zu einer zuverlässigen Befestigung der Dichtung an dem Karosserieteil trägt bei, daß die Lasche eine Öffnung aufweist, in die ein an dem Karosserieteil angeordneter Vorsprung eingreift. Alternativ können die Öffnung an dem Karosserieteil und der Vorsprung an der Lasche vorgesehen sein. Der sich zwischen Lasche und Vorsprung ergebende Formschluß hat eine signifikante Erhöhung der zum Abziehen der Dichtung von dem Karosserieteil erforderlichen Abzugskraft zur Folge. Da der Befestigungsabschnitt im Querschnitt annähernd U-förmig ausgestaltet und auf einen Flansch des Karosserieteils aufgesteckt ist, läßt sich die Dichtung einfach und schnell an dem Karosserieteil befestigen. Zudem läßt sich durch das Aufstecken des Befestigungsabschnitts auf den Flansch zugleich die Lasche formschlüssig mit dem Flansch verbinden, indem die Öffnung der Lasche in den an dem Flansch angeordneten Vorsprung einrastet.

Vorteilhafte Ausgestaltungen der erfindungsgemäßen Dichtungsanordnung stellen die Gegenstände der Ansprüche 2 bis 6 dar.

Von besonderem Vorteil ist es, mehrere Laschen vorzusehen, die voneinander beabstandet an dem Befestigungsabschnitt angeordnet sind. Die Abzugskraft wird durch das Vorsehen mehrerer Laschen weiter vergrößert. Zudem können die Laschen auf diese Weise verhältnismäßig geringe Abmessungen haben, wodurch die Montage erleichtert wird. Die Laschen erstrecken sich zweckmäßigerweise in Längsrichtung der Dichtung und sind äquidistant angeordnet, um eine gleichmäßige Abzugskraft entlang der Dichtung zu bewirken.

Vorteilhafterweise ist der Befestigungsabschnitt durch einen vorzugsweise metallenen Träger armiert. Der Träger gewährleistet eine ausreichende Steifigkeit des Befestigungsabschnitts und trägt somit zu einer zuverlässigen Befestigung bei.

Um eine einfache und kostengünstige Fertigung der Dichtung zu erreichen, ist bevorzugt die Dichtung aus einem elastisch verformbaren Werkstoff, vorzugsweise einem thermoplastischen Elastomer oder Ethylen-Propylen-Dien-Kautschuk (EPDM), extrudiert. Die Fertigung der Dichtung durch Extrusion trägt der vor allem im Fahrzeugbau anzutreffenden Massenfertigung Rechnung.

Erfindungsgemäß ist die Lasche stoffschlüssig durch Spritzgießen mit dem Befestigungsabschnitt verbunden. Damit sich die Dichtung und die Lasche auf einfache und kostengünstige Weise fertigen. Die Lasche wird durch lassen Spritzgießen nach der Extrusion der Dichtung mit dem Befestigungsabschnitt verbunden. Es hat sich als besonders vorteilhaft herausgestellt, für die Lasche einen thermoplastischen Kunststoff, vorzugsweise Polyethylen (PE), vorzusehen. Denn eine aus einem thermoplastischen Kunststoff bestehende Lasche läßt sich mit einer vergleichsweise großen Steifigkeit versehen, so daß ein ausreichender Kraftfluß von der Lasche in das Karosserieteil sichergestellt ist.

Einzelheiten und weitere Vorteile der erfindungsgemäßen Dichtungsanordnung ergeben sich aus der nachfolgenden Beschreibung eines bevorzugten Ausführungsbeispieles. In den das Ausführungsbeispiel lediglich schematisch darstellenden Zeichnungen veranschaulichen im einzelnen:
- Fig. 1: eine Seitenansicht eines Kraftfahrzeugs;
- Fig. 2: einen Querschnitt entlang der Linie II in Fig. 1 durch eine Dichtung und
- Fig. 3: eine Seitenansicht der Dichtung gemäß Fig. 2.

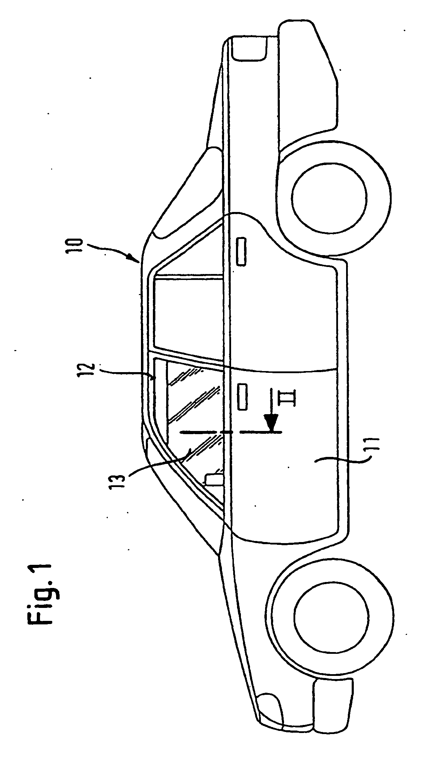

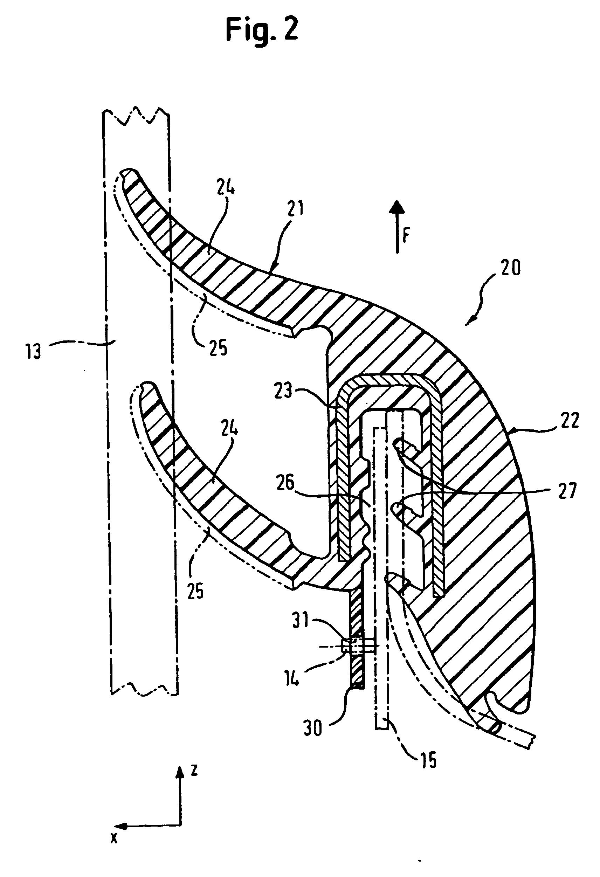

Das in Fig. 1 dargestellte Kraftfahrzeug 10 ist mit einer Tür 11 versehen, die einen Rahmen 12 aufweist. Innerhalb des Rahmens 12 ist eine Fensterscheibe 13 verfahrbar angeordnet. Die Fensterscheibe 13 wird durch eine Dichtung 20 abgedichtet, die an einem Flansch 15 der Tür 11 befestigt ist. Zu diesem Zweck weist die Dichtung 20 neben einem an der Fensterscheibe 13 anliegenden Dichtungsabschnitt 21 einen Befestigungsabschnitt 22 auf, der im Querschnitt annähernd U-förmig ausgestaltet ist. Der Befestigungsabschnitt 22 weist eine Ausnehmung 26 auf, die auf den Flansch 15 gesteckt ist, wie insbesondere aus Fig. 2 ersichtlich ist. In der Ausnehmung 26 sind Haltelippen 27 angeordnet, die den Befestigungsabschnitt 22 kraftschlüssig mit dem Flansch 15 verbinden.

Die Dichtung 20 erstreckt sich entlang dem Umfang des Rahmens 12 und dichtet die Fensterscheibe 13 mittels Dichtungslippen 24 ab. Die Dichtungslippen 24 sind mit einer die beim Verfahren der Fensterscheibe 13 auftretende Reibung vermindernden Beflockung 25 versehen.

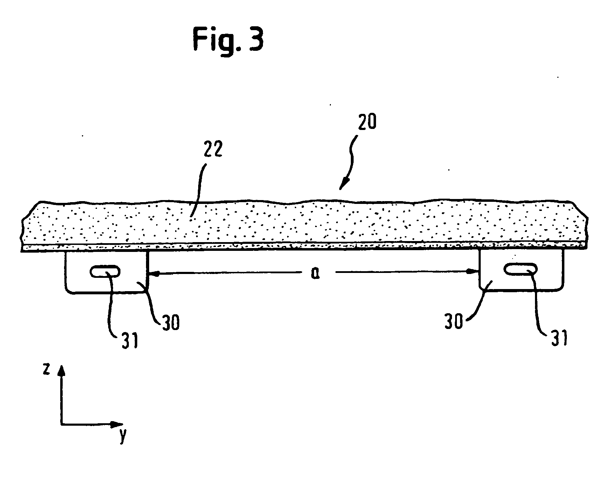

Wie Fig. 2 ferner erkennen läßt, ist der Befestigungsabschnitt 22 im Bereich der Ausnehmung 26 durch einen aus Kunststoff oder Metall bestehenden Träger 23 armiert, der eine im Querschnitt annähernd U-förmige Ausgestaltung aufweist. Der Träger 23 dient dazu, der aus EPDM bestehenden und elastisch verformbaren Dichtung 20 im Bereich des Befestigungsabschnitts 22 eine ausreichende Steifigkeit zu verleihen, die zu einer kraftschlüssigen Befestigung der Dichtung 20 an dem Flansch 15 mittels der Haltelippen 27 beiträgt. Um eine zuverlässige und dauerhafte Befestigung sicherzustellen, sind zumindest im Bereich eines die Fensterscheibe 13 aufnehmenden Schachts der Tür 11 an dem Befestigungsabschnitt 22 eine Vielzahl von Laschen 30 angeordnet, die eine Öffnung 31 aufweisen. Die in einem Abstand a voneinander entfernten Laschen 30 erstrecken sich in Längsrichtung y der Dichtung 20, wie Fig. 3 erkennen läßt. Die Laschen 30 sind durch Spritzgießen stoffschlüssig mit dem Befestigungsabschnitt 22 verbunden. Zu diesem Zweck bestehen die Laschen 30 aus einem vergleichsweise harten thermoplastischen Kunststoff, beispielsweise Polyethylen, der zum einen einen schnellen und dauerhaften Stoffschluß mit der aus EPDM bestehenden Dichtung 20 gewährleistet und zum anderen der Lasche 30 eine ausreichende Steifigkeit verleiht.

In die Öffnung 31 der Laschen 30 greift ein an dem Flansch 15 angeordneter Vorsprung 14 ein, wie aus Fig. 2 ersichtlich ist. Der Vorsprung 14 und die Lasche 30 bilden auf diese Weise einen Formschluß, der den Befestigungsabschnitt 22 sicher an dem Flansch 15 befestigt. Darüber hinaus wird eine Abzugskraft F, die erforderlich ist, die Dichtung 20 von dem Flansch 15 abzuziehen, signifikant erhöht. Grund hierfür ist in erster Linie, daß der Formschluß zwischen Lasche 30 und Flansch 15 vornehmlich in Querrichtung x wirkt, wohingegen die Abzugskraft F orthogonal hierzu, das heißt in Richtung der Koordinatenachse z, orientiert ist.

Die zuvor beschriebene Dichtungsanordnung zeichnet sich durch eine zuverlässige Befestigung der Dichtung 20 an dem Flansch 15 der Tür 11 aus. Ursache hierfür sind vor allem die Laschen 30, die einen Formschluß zwischen der Dichtung 20 und dem Flansch 15 bewirken. Darüber hinaus läßt sich die Dichtung 20 auf einfache Weise an dem Flansch 15 befestigen, indem beim Aufstecken der Ausnehmung 26 auf den Flansch 15 der Vorsprung 14 in der Öffnung 31 der Laschen 30 einrastet. Die Laschen 30 sind durch Spritzgießen stoffschlüssig mit dem Befestigungsabschnitt 22 der extrudierten Dichtung 20 verbunden, so daß nicht zuletzt einer kostengünstigen Fertigung Rechnung getragen wird.

### Bezugszeichenliste

- 10: Kraftfahrzeug
- 11: Tür
- 12: Rahmen
- 13: Fensterscheibe
- 14: Vorsprung
- 15: Flansch

- 20: Dichtung
- 21: Dichtungsabschnitt
- 22: Befestigungsabschnitt
- 23: Träger
- 24: Dichtungslippe
- 25: Beflockung
- 26: Ausnehmung
- 27: Haltelippe

- 30: Lasche
- 31: Öffnung

- F: Abzugskraft

- a: Abstand
- x: Querrichtung
- y: Längsrichtung
- z: Koordinatenachse

## Patentansprüche

1. Dichtungsanordnung, insbesondere zum Abdichten einer verfahrbaren Fensterscheibe (13) eines Kraftfahrzeugs (10), mit einem Karosserieteil (11) und einer Dichtung (20), die einen Dichtungsabschnitt (21) und einen Befestigungsabschnitt (22) aufweist und aus einem elastisch verformbaren Werkstoff extrudiert ist, wobei an dem Befestigungsabschnitt (22) eine Lasche (30) angeordnet ist, die formschlüssig mit dem Karosserieteil (11) verbunden ist, **dadurch gekennzeichnet, daß** die Lasche (30) aus einem eine in Bezug auf den Werkstoff, aus dem der Befestigungsabschnitt (22) extrudiert ist, vergleichsweise hohe Steifigkeit aufweisenden Werkstoff gefertigt ist und daß der Befestigungsabschnitt (22) im Querschnitt annährend U-förmig ausgestaltet ist und eine Ausnehmung (26) aufweist, die in einer ersten Richtung (z) kraftschlüssig auf einen Flansch (15) des Karosserieteils (11) gesteckt ist, wobei an dem Flansch (15) ein Vorsprung 14 angeordnet ist, der in einer zweiten Richtung (x), die sich annähernd orthogonal zu der ersten Richtung (z) erstreckt, in eine Öffnung (31) der Lasche (30) eingreift, wobei die Lasche (30) stoffschlüssig durch Spritzgießen mit dem Befestigungsabschnitt (22) verbunden ist.

2. Dichtungsanordnung nach Anspruch 1, **gekennzeichnet durch** mehrere Laschen (30), die voneinander beabstandet an dem Befestigungsabschnitt (22) angeordnet sind.

3. Dichtungsanordnung nach Anspruch 1 oder 2, **dadurch gekennzeichnet, daß** der Befestigungsabschnitt (22) durch einen vorzugsweise metallenen Träger (23) armiert ist.

4. Dichtungsanordnung nach einem der Ansprüche 1 bis 3, **dadurch gekennzeichnet, daß** die Dichtung (20) aus einem thermoplastischen Elastomer oder Ethylen-Propylen-Dien-Kautschuk extrudiert ist.

5. Dichtungsanordnung nach einem der Ansprüche 1 bis 4, **dadurch gekennzeichnet, daß** die Lasche (30) aus einem thermoplastischen Kunststoff, vorzugsweise Polyethylen, besteht.

## Claims

1. Sealing arrangement particularly for a movable window pane (13) of a vehicle (10) with a bodywork part (11) and a seal (20) comprising a sealing section (21) and a fastening section (22) and being extruded of an elastically deformable material, whereby said fastening section (22) is provided with a clip bracket (30) which locks positively with the bodywork part (11) **characterised in that** said clip bracket (30) is manufactured of a material of relatively high rigidity in comparison to the material of which the fastening section (22) is extruded, that said fastening section (22) has a nearly U-shaped cross-section and has a recess (26) which in one direction (z) is fitted to and locks positively with a flange (15) of the bodywork part (11) whereby said flange (15) is provided with a projection (14) which engages in a second direction (x), nearly orthogonally to the first direction (z), in an aperture (31) of the clip bracket (30), whereby the clip bracket (30) is integrally combined with the fastening section (22) by using injection moulding methods.

2. Sealing arrangement according to Claim 1, **characterised in that** the fastening section (22) having multiple clip brackets (30) spaced at a distance from each other.

3. Sealing arrangement according to Claim 1 or 2, **characterised in that** the fastening section (22) is reinforced preferably by a metal support (23).

4. Sealing arrangement according to any of the Claims 1 to 3, **characterised in that** the seal (20) is extruded preferably from a thermoplastic elastomer or ethylene propylene dien rubber.

5. Sealing arrangement according to any of the Claims 1 to 5, **characterised in that** the clip bracket (30) is manufactured of a thermoplastic material, preferably of polyethylene.

## Revendications

1. Agencement d'étanchéité, en particulier pour étancher une vitre mobile (13) d'un véhicule automobile (10), comprenant un élément de carrosserie (11) et un joint d'étanchéité (20) qui comprend une portion d'étanchéité (21) et une portion de fixation (22) et qui est extrudé à partir d'un matériau élastiquement déformable, une patte (30) étant agencée sur la portion de fixation (22), patte qui est reliée en coopération de formes à l'élément de carrosserie (11), **caractérisé en ce que** la patte (30) est fabriquée à partir d'un matériau qui présente une rigidité comparativement élevée par rapport au matériau à partir duquel la portion de fixation (22) est extrudée et **en ce que** la portion de fixation (22) est réalisée avec une section transversale approximativement en forme de U et présente un évidement (26) qui est appliqué dans une première direction (z) en coopération de forces sur une bride (15) de l'élément de carrosserie (11), une saillie (14) étant agencée sur la bride (15), qui s'engage dans une ouverture (31) de la patte (30) dans une seconde direction (x) approximativement orthogonale à la première direction (z), la patte (30) étant reliée par coopération de matières à la portion de fixation (22) par coulée par injection.

2. Agencement d'étanchéité selon la revendication 1, **caractérisé par** plusieurs pattes (30) qui sont agencées à distance les unes des autres sur la portion de fixation (22).

3. Agencement d'étanchéité selon l'une ou l'autre des revendications 1 et 2, **caractérisé en ce que** la portion de fixation (22) est armée d'un support (23) de préférence métallique.

4. Agencement d'étanchéité selon l'une des revendications 1 à 3, **caractérisé en ce que** le joint (20) est extrudé à partir d'un élastomère thermoplastique ou de caoutchouc éthylène-propylène-diène.

5. Agencement d'étanchéité selon l'une des revendications 1 à 5, **caractérisé en ce que** la patte (30) est constituée d'une matière synthétique thermoplastique, de préférence du polyéthylène.
